# EUROPEAN PATENT APPLICATION

(11) **EP 3 051 682 A1**
(43) Date of publication of application: **03.08.2016**
(21) Application number: 15275028.7
(22) Date of filing: 29.01.2015
(51) Int. Cl.: H02M 7/217, H02M 7/487

(54) **Voltage source converter**

(71) Applicant: General Electric Technology GmbH, 5400 Baden (CH)
(72) Inventor: OATES, Colin Donald Murray, Stafford Staffordshire ST17 0TL (GB); TRAINER, David Reginald, Derby DE24 0AQ (GB); JASMIN, Omar Fadhel, Nottingham NG8 2RW (GB); CHIVITE-ZABALZA, Francisco Javier, Stafford Staffordshire ST17 4XQ (GB); DYKE, Kevin James, Stafford Staffordshire ST17 4YA (GB); MORENO MUÑOZ, Francisco Jose, 31780 Bera Navarra (ES); WHITEHOUSE, Robert Stephen, Stafford Staffordshire ST17 0JU (GB)
(74) Representative: Potter Clarkson LLP

(57) **Abstract**

A voltage source converter (30) comprises: first and second DC terminals (32,34) for connection to a DC network (40); a third terminal (36) for connection to ground or a voltage; and a plurality of AC terminals (38), each AC terminal (38) for connection to a respective phase of a multi-phase AC network (42).

The voltage source converter (30) includes:
a plurality of multi-level switching cells (44), each multi-level switching cell (44) including an AC connecting point and first, second and third further connecting points, the third terminal (36) connected to each third further connecting point of each multi-level switching cell (44), the AC connecting point of each multi-level switching cell (44) being connected to a respective one of the plurality of AC terminals (38), each multi-level switching cell (44) being arranged to permit selectively switching of the corresponding AC terminal (38) into circuit with each of the corresponding further connecting points separately;
a switching controller (46) programmed to control the switching of each multi-level switching cell (44) to selectively switch the corresponding AC terminal (38) into circuit with each of the corresponding further connecting points separately;
first and second waveform synthesizers (48,50), the first waveform synthesizer (48) connected between the first DC terminal (32) and each first further connecting point of each multi-level switching cell (44), the second waveform synthesizer (50) connected between the second DC terminal (34) and each second further connecting point of each multi-level switching cell (44); and
a synthesizer controller (64) programmed to selectively operate each waveform synthesizer (48,50) to synthesize a voltage waveform to control the configuration of the AC voltage at the AC terminal (38) that is switched into circuit with the corresponding further connecting point.

## Description

This invention relates to a voltage source converter.

In power transmission networks alternating current (AC) power is typically converted to direct current (DC) power for transmission via overhead lines and/or undersea cables. This conversion removes the need to compensate for the AC capacitive load effects imposed by the transmission line or cable, and thereby reduces the cost per kilometer of the lines and/or cables. Conversion from AC to DC thus becomes cost-effective when power needs to be transmitted over a long distance.

The conversion of AC to DC power is also utilized in power transmission networks where it is necessary to interconnect AC networks operating at different frequencies. In any such power transmission network, converters are required at each interface between AC and DC power to effect the required conversion.

According to an aspect of the invention, there is provided a voltage source converter comprising: first and second DC terminals for connection to a DC network; a third terminal for connection to ground or a voltage; and a plurality of AC terminals, each AC terminal for connection to a respective phase of a multi-phase AC network,
wherein the voltage source converter includes:
a plurality of multi-level switching cells, each multi-level switching cell including an AC connecting point and first, second and third further connecting points, the third terminal connected to each third further connecting point of each multi-level switching cell, the AC connecting point of each multi-level switching cell being connected to a respective one of the plurality of AC terminals, each multi-level switching cell being arranged to permit selectively switching of the corresponding AC terminal into circuit with each of the corresponding further connecting points separately;
a switching controller programmed to control the switching of each multi-level switching cell to selectively switch the corresponding AC terminal into circuit with each of the corresponding further connecting points separately;
first and second waveform synthesizers, the first waveform synthesizer connected between the first DC terminal and each first further connecting point of each multi-level switching cell, the second waveform synthesizer connected between the second DC terminal and each second further connecting point of each multi-level switching cell; and
a synthesizer controller programmed to selectively operate each waveform synthesizer to synthesize a voltage waveform to control the configuration of the AC voltage at the AC terminal that is switched into circuit with the corresponding further connecting point.

The configuration of the voltage source converter of the invention enables the operation of each waveform synthesizer to control the configuration of the AC voltage at each of the plurality of AC terminals, and thereby allows the control of the configuration of the AC voltages at the AC terminals to be shared among the plurality of waveform synthesizers. This results in savings in terms of size, weight and cost of the voltage source converter of the invention when compared to a conventional voltage source converter in which a given converter component is designed to control the configuration of a single AC phase voltage, thus necessitating the use of multiple copies of the given converter components in order to control the configuration of multiple AC phase voltages.

The components of the voltage source converter of the invention may vary in structure and configuration.

The switching and synthesizer controllers may be integral with each other or separate from one another. The switching controller may include a plurality of switching sub-controllers, each of which controls the switching of a respective one of the multi-level switching cells. The synthesizer controller may include a plurality of synthesizer controllers, each of which operates a respective one of the waveform synthesizers.

Each waveform synthesizer may be or may include a chain-link converter.

The chain-link converter may include a plurality of modules, e.g. a plurality of series-connected modules, whereby each module includes at least one energy storage device and is operable to selectively provide a voltage source. Each module may include at least one switching element, whereby the or each switching element and the or each energy storage device combine to selectively provide a voltage source, e.g. a unidirectional or a bidirectional voltage source.

Each module may include a pair of switching elements connected in parallel with an energy storage device in a half-bridge arrangement to define a 2-quadrant unipolar module that can provide zero or positive voltages and can conduct current in two directions. Alternatively each module may include two pairs of switching elements connected in parallel with an energy storage device in a full-bridge arrangement to define a 4-quadrant bipolar module that can provide negative, zero or positive voltages and can conduct current in two directions.

The structure of the chain-link converter makes it possible to build up a combined voltage across the chain-link converter, which is higher than the voltage available from each of its individual modules, via the insertion of the energy storage devices of multiple modules, each providing its own voltage, into each chain-link converter. In this manner operation of each module causes the chain-link converter to provide a stepped variable voltage source, which permits the generation of a voltage waveform across the chain-link converter using a step-wise approximation.

Each multi-level switching cell may be selected from a group including, but is not limited to:
- a three-level switching cell;
- a neutral point clamped switching cell;
- a neutral point piloted switching cell;
- a three-pole, triple throw switching cell.

The switching operation of each multi-level switching cell may vary depending on the requirements of the voltage source converter and/or the associated AC and DC networks.

In embodiments of the invention, the switching controller may be programmed to control the switching of each multi-level switching cell to simultaneously switch each waveform synthesizer into circuit with a respective one of the AC terminals. This permits simultaneous control of the configuration of the plurality of AC voltages at the AC terminals.

In further embodiments of the invention, the switching controller may be programmed to control the switching of each multi-level switching cell to sequentially switch the corresponding AC terminal into circuit with each of the corresponding further connecting points during an operating cycle of the voltage source converter. This permits each waveform synthesizer to be sequentially switched into circuit with each AC terminal via the corresponding multi-level switching cell, and thereby permits the operation of each waveform synthesizer to control the configuration of the AC voltage at each AC terminal in a sequential manner.

The arrangement of the various components of the voltage source converter of the invention may vary.

The voltage source converter may include a converter limb extending between the first and second DC terminals. The converter limb may include two DC side capacitors. A junction between the two DC side capacitors may define the third terminal.

The only waveform synthesizers in the voltage source converter may be the first and second waveform synthesizers. This results in a compact and minimal arrangement of the voltage source converter that is optimised for applications requiring only the first and second waveform synthesizers, thus providing further savings in terms of size, weight and cost.

The voltage source converter may further include a third waveform synthesizer connected to the third terminal.

The only waveform synthesizers in the voltage source converter may be the first, second and third waveform synthesizers. This results in a compact and minimal arrangement of the voltage source converter that is optimised for applications requiring only the first, second and third waveform synthesizers, thus providing further savings in terms of size, weight and cost.

The voltage source converter may include a converter limb. The converter limb may include first and second limb portions. Each limb portion may extend between the third terminal and a respective one of the first and second DC terminals. The third waveform synthesizer may include first and second waveform synthesizer portions. Each limb portion may include a respective one of the waveform synthesizer portions.

The third waveform synthesizer may be connected between the third terminal and each third connecting point of each multi-level switching cell.

Alternatively the third terminal may be directly connected to each third further connecting point of each multi-level switching cell.

The operation of each waveform synthesizer may vary depending on the requirements of the voltage source converter and/or the associated AC and DC networks.

In embodiments of the invention, the synthesizer controller may be programmed to selectively operate each waveform synthesizer to continuously and/or cyclically synthesize the voltage waveform during at least one operating cycle of the voltage source converter. This permits continuous and/or cyclic operation of the voltage source converter to control the configuration of the AC voltages at the AC terminals.

In further embodiments of the invention, the synthesizer controller may be programmed to selectively operate each waveform synthesizer to control the configuration of a respective portion of the AC voltage at each AC terminal. This permits the control of the configuration of the AC voltage at each AC terminal to be shared among the plurality of waveform synthesizers.

In such embodiments of the invention, the synthesizer controller may be programmed to selectively operate:
- the first waveform synthesizer to control the configuration of a first portion of the AC voltage at each AC terminal extending between: a peak positive voltage; and a zero voltage or an intermediate positive voltage; and
- the second waveform synthesizer to control the configuration of a second portion of the AC voltage at each AC terminal extending between: a peak negative voltage; and a zero voltage or an intermediate negative voltage.

Programming the synthesizer controller in this manner permits the operation of each of the first and second waveform synthesizers to control the configuration of a respective portion of the AC voltage at each AC terminal.

In addition operating the first and second waveform synthesizers to control the configuration of the AC voltage at each AC terminal between the peak positive and negative voltages not only obviates the need to operate a further waveform synthesizer to control the configuration of the AC voltage at each AC terminal, but also allows omission of any further waveform synthesizer from the voltage source converter.

In still further embodiments of the invention, the synthesizer controller may be programmed to selectively operate the third waveform synthesizer to control the configuration of a third portion of the AC voltage at each AC terminal extending between the intermediate positive and negative voltages when the first portion of the AC voltage at each AC terminal extends between the peak positive and intermediate voltages and when the second portion of the AC voltage at each AC terminal extends between the peak negative and intermediate voltages.

Programming the synthesizer controller in this manner permits the operation of the first, second and third waveform synthesizers to control the configuration of the AC voltage at each AC terminal between the peak positive and negative voltages, and thereby permits the reduction in the range of the voltage waveforms required to be synthesised by the first and second waveform synthesizers.

Optionally the synthesizer controller may be programmed to selectively operate each waveform synthesizer to synthesize the voltage waveform to include at least one triplen harmonic voltage component and to incorporate the or each triplen harmonic voltage component into the AC voltage at the AC terminal that is switched into circuit with the corresponding further connecting point.

The or each triplen harmonic component may be selected to control the range of the voltage waveform required to be synthesized by each waveform synthesizer to control the configuration of the AC voltage at the AC terminal that is switched into circuit with the corresponding further connecting point. Controlling the range of the voltage waveform required to be synthesized by each waveform synthesizer directly affects the voltage rating required of each waveform synthesizer, and hence the or each triplen harmonic component may be selected to optimise the relative voltage ratings of the waveform synthesizers to provide further savings in terms of size, weight and cost of the voltage source converter.

Preferably the or each triplen harmonic component may be selected to control the range of the voltage waveform required to be synthesized by each of the first and second waveform synthesizers to extend between a zero voltage and a respective one of peak positive and negative voltages. This not only obviates the need to operate a further waveform synthesizer to control the configuration of the AC voltage at each AC terminal, but also allows omission of any further waveform synthesizer from the voltage source converter.

Further optionally the synthesizer controller may be programmed to selectively operate the waveform synthesizers to control the configuration of the AC voltage at each AC terminal independently of the configuration of the AC voltage at each other AC terminal. This permits individual configuration of the AC voltage at each AC terminal to obtain a variety of profiles of the AC voltages at the AC terminals. For example, the synthesizer controller may be programmed to selectively operate the waveform synthesizers to control the configuration of a plurality of imbalanced AC voltages at the AC terminals.

The voltage source converter of the invention may be configured to permit protection of the voltage source converter from a fault in the converter, the AC network and/or the DC network.

In embodiments of the invention, the synthesizer controller may be programed to operate either or both of the first and second waveform synthesizers to synthesize an opposing voltage to oppose the flow of a fault current flowing in the voltage source converter. This provides a reliable means of protecting the voltage source converter and any associated equipment from the fault current, without requiring the installation of additional protection hardware which would result in additional size, weight and cost.

In further embodiments of the invention, the voltage source converter may further include at least one switching element connected in series with either or a respective one of the first and second waveform synthesizers between the corresponding DC terminal and each corresponding further connecting point. The provision of the or each switching element provides voltage blocking capability to permit the voltage source converter to cope with a fault in the AC network and/or DC network.

In still further embodiments of the invention, at least one of the waveform synthesizers may include at least one energy storage device. The synthesizer controller may be programmed to selectively operate the at least one of the waveform synthesizers to synthesize a secondary voltage component so as to transfer energy to or from the or each corresponding energy storage device and thereby regulate an energy level of the or each corresponding energy storage device, preferably to minimise a net change in energy level of the or each corresponding energy storage device over a defined period (e.g. an operating cycle of the voltage source converter).

Operation of the voltage source converter to transfer power between the AC and DC networks could result in energy accumulation in (or energy loss from) at least one energy storage device, thus resulting in deviation of the energy level of at least one energy storage device from a reference value.

Such a deviation is undesirable because, if too little energy is stored within a given energy storage device then the range of the voltage waveform the corresponding waveform synthesizer is able to generate is reduced, whereas if too much energy is stored in a given energy storage device then over-voltage problems may arise. The former would require the addition of a power source to restore the energy level of the affected energy storage device to the reference value, while the latter would require an increase in voltage rating of one or more energy storage devices to prevent the over-voltage problems, thus adding to the overall size, weight and cost of the voltage source converter. In addition if too little energy is stored within a given energy storage device then the voltage source converter might trip due to under-voltage protection.

The configuration of the voltage source converter according to the invention allows energy to be transferred to and from the or each energy storage device to regulate its energy level, thereby obviating the problems associated with a deviation of the energy level of at least one energy storage device from the reference value.

The secondary voltage component may have the same frequency as a current component flowing through the corresponding waveform synthesizer. This improves the efficiency of the energy transfer to or from the or each corresponding energy storage device.

The secondary voltage component is selected from a group including:
- a harmonic voltage component, preferably a triplen harmonic voltage component, further preferably a 3^{rd} harmonic voltage component;
- a DC voltage component.

When a DC or harmonic current component flows through the waveform synthesizer, selecting the corresponding secondary voltage component, i.e. a direct current or harmonic current component, permits efficient energy transfer to or from the or each energy storage device without significantly impacting on the ability of the voltage source converter to transfer power between the AC and DC networks.

In embodiments employing the use of a third waveform synthesizer, the synthesizer controller may be programmed to selectively operate the third waveform synthesizer to synthesize a compensatory voltage component and incorporate the compensatory voltage component into the AC voltage at the AC terminal that is switched into circuit with the corresponding third further connecting point when either or each of the first and second waveform synthesizers are operated to synthesize the or the respective secondary voltage component, the compensatory voltage component being configured to compensate for any change to the AC voltage at each AC terminal resulting from the synthesis of the or each secondary voltage component. In such embodiments the compensatory voltage component may be identical to each of the secondary voltage components.

Generation of the compensatory voltage component by the third waveform synthesizer prevents the AC voltages at the AC terminals to deviate from a desired profile, e.g. a symmetrical profile, during the synthesis of the or each secondary voltage component.

In further embodiments employing the use of a third waveform synthesizer, the third waveform synthesizer may include at least one energy storage device, and the synthesizer controller may be programmed to selectively operate the third waveform synthesizer to form a current circulation path including the converter limb and the DC network and to cause a circulation current to flow through the current circulation path and thereby transfer energy to or from the or each corresponding energy storage device from or to the DC network. This provides a reliable means of regulating the energy level of the or each energy storage device of the third waveform synthesizer, without requiring an additional power source and/or an increase in voltage rating of the or each corresponding energy storage device.

In embodiments of the invention in which the third waveform synthesizer is included in the converter limb, the converter limb may further include an inductor connected with the third waveform synthesizer between the first and second DC terminals, and the synthesizer controller may be programmed to selectively operate the third waveform synthesizer to synthesize the voltage waveform to control a current flowing in the inductor and thereby inject a filtering current component, e.g. an anti-phase current component, into the DC network so as to cancel a current component in the DC network. This provides a reliable means of filtering one or more current components, e.g. ripple current components, in the DC network, without requiring the installation of additional filtering hardware which would result in additional size, weight and cost.

The synthesizer controller may be programmed to selectively operate each waveform synthesizer portion to synthesize a respective voltage waveform to simultaneously:
- actively vary a voltage differential between the voltages across the first and second limb portions so as to control the current flowing in the inductor; and
- control the average voltage across the converter limb to be the same or substantially the same as the voltage of the DC network presented across the first and second DC terminals.

Programming the synthesizer controller in this manner permits the converter limb to inject the filtering current component into the DC network, without hampering the ability of the third waveform synthesizer to control the configuration of the AC voltage at the AC terminal that is switched into circuit with the corresponding third further connecting point.

The voltage source converter may include three AC terminals, each AC terminal for connection to a respective phase of a three-phase AC network.

Preferred embodiments of the invention, will now be described, by way of non-limiting examples, with reference to the accompanying drawings in which:
Figure 1 shows schematically a voltage source converter according to a first embodiment of the invention;
Figures 2a and 2b show schematically a 4-quadrant bipolar module and a 2-quadrant unipolar module respectively;
Figures 3 to 15 illustrate the operation of the voltage source converter of Figure 1;
Figure 16 shows schematically a voltage source converter according to a second embodiment of the invention;
Figure 17 shows schematically a voltage source converter according to a third embodiment of the invention;
Figure 18 shows schematically a voltage source converter according to a fourth embodiment of the invention;
Figure 19 shows schematically a voltage source converter according to a fifth embodiment of the invention; and
Figure 20 illustrate the operation of the voltage source converter of Figure 19.

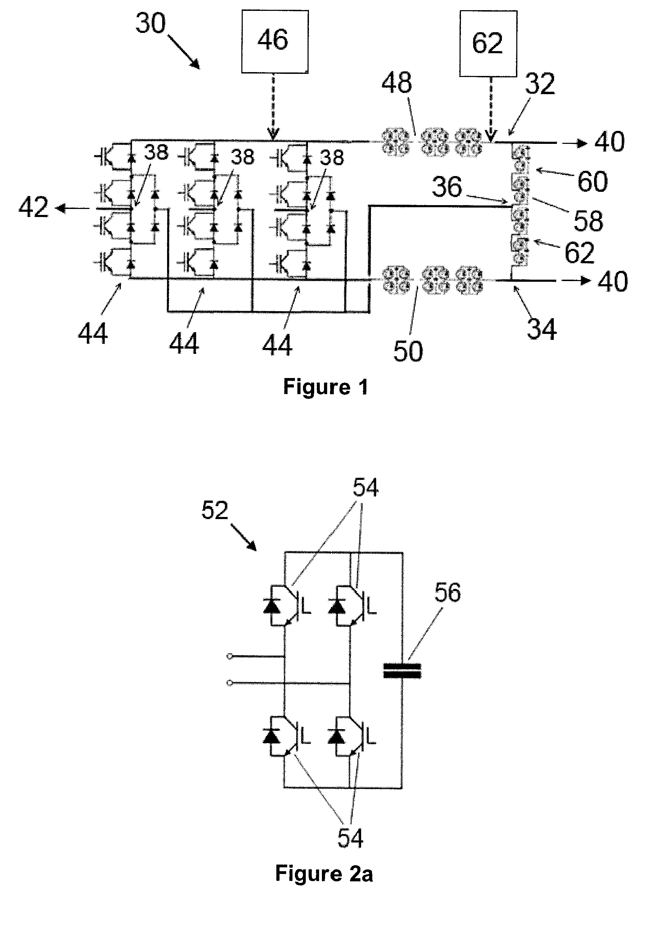

A first voltage source converter according to a first embodiment of the invention is shown in Figure 1 and is designated generally by the reference numeral 30.

The first voltage source converter 30 comprises first and second DC terminals 32,34, a third terminal 36 and a plurality of AC terminals 38, namely three AC terminals 38.

In use, the first and second DC terminals 32,34 are respectively connected to positive and negative poles of a DC network 40, the positive and negative poles carrying positive and negative DC voltages respectively, and each AC terminal 38 are connected to a respective phase of a three-phase AC network 42.

The first voltage source converter 30 includes a plurality of multi-level switching cells 44. In the embodiment shown, each multi-level switching cell 44 is in the form of a three-level neutral point clamped switching cell. Each multi-level switching cell 44 includes an AC connecting point and first, second and third further connecting points. A first pair of series-connected insulated gate bipolar transistors (IGBT) are connected between the AC and first further connecting points, a second pair of series-connected IGBTs are connected between the AC and second further connecting points, a pair of clamping diodes is connected between a midpoint of the first pair of series-connected IGBTs and a midpoint of the second pair of series-connected IGBTs, and a junction between the clamping diodes defines the third further connecting point. It is understood that, in other embodiments of the invention, the clamping diodes may be replaced by active switching elements.

The neutral point clamped structure of each multi-level switching cell 44 permits the IGBTs of each multi-level switching cell 44 to switch at nominally zero voltage, thus resulting in low switching losses.

The third terminal 36 is directly connected to each third further connecting point of each multi-level switching cell 44. The AC connecting point of each multi-level switching cell 44 is connected to a respective one of the plurality of AC terminals 38. The arrangement of the IGBTs and clamping diodes in each multi-level switching cell 44 permits selective switching of the corresponding AC terminal 38 into circuit with each of the corresponding further connecting points separately, i.e. one at a time.

The voltage source includes a switching controller 46 programmed to control the switching of the IGBTs of each multi-level switching cell 44 to selectively switch the corresponding AC terminal 38 into circuit with each of the corresponding further connecting points separately.

The first voltage source converter 30 includes first and second waveform synthesizers 48,50. The first waveform synthesizer 48 is connected between the first DC terminal 32 and each first further connecting point of each multi-level switching cell 44. The second waveform synthesizer 50 is connected between the second DC terminal 34 and each second further connecting point of each multi-level switching cell 44.

Each of the first and second waveform synthesizer 50 is in the form of a first chain-link converter. Each first chain-link converter includes a plurality of series-connected modules 52. Each module 52 includes two pairs of switching elements 54 and an energy storage device in the form of a capacitor 56. In each module 52, the pairs of switching elements 54 are connected in parallel with the capacitor 56 in a full-bridge arrangement to define a 4-quadrant bipolar module 52 that can provide negative, zero or positive voltages and can conduct current in two directions. Figure 2a shows the structure of the 4-quadrant bipolar module 52.

The capacitor 56 of each module 52 is selectively bypassed and inserted into the first chain-link converter by changing the states of the corresponding switching elements 54. This selectively directs current through the capacitor 56 or causes current to bypass the capacitor 56 so that the module 52 provides a negative, zero or positive voltage.

The capacitor 56 of the module 52 is bypassed when the switching elements 54 are configured to form a current path that causes current in the first chain-link converter to bypass the capacitor 56, and so the module 52 provides a zero voltage, i.e. the module 52 is configured in a bypassed mode.

The capacitor 56 of the module 52 is inserted into the first chain-link converter when the switching elements 54 are configured to allow the current in the first chain-link converter to flow into and out of the capacitor 56. The capacitor 56 then charges or discharges its stored energy so as to provide a non-zero voltage, i.e. the module 52 is configured in a non-bypassed mode. The full-bridge arrangement of the switching elements 54 permits configuration of the switching elements 54 to cause current to flow into and out of the capacitor 56 in either direction, and so each module 52 can be configured to provide a negative or positive voltage in the non-bypassed mode.

The first voltage source converter 30 further includes a converter limb. The converter limb includes first and second limb portions 60,62, each of which extends between the third terminal 36 and a respective one of the first and second DC terminals 32,34. The third waveform synthesizer 58 includes first and second waveform synthesizer portions. The first limb portion 60 includes the first waveform synthesizer portion, and the second limb portion 62 includes the second waveform synthesizer portion.

The third waveform synthesizer 58 is in the form of a second chain-link converter. The second chain-link converter includes a plurality of series-connected modules 52. In the embodiment shown, half of the modules 52 of the second chain-link converter is in the first waveform synthesizer portion of the first limb portion 60, and the other half of the modules 52 of the second chain-link converter is in the second waveform synthesizer portion of the second limb portion 62. It will be appreciated that the division of the modules 52 between the first and second limb portions 60,62 may vary from what is shown in Figure 1.

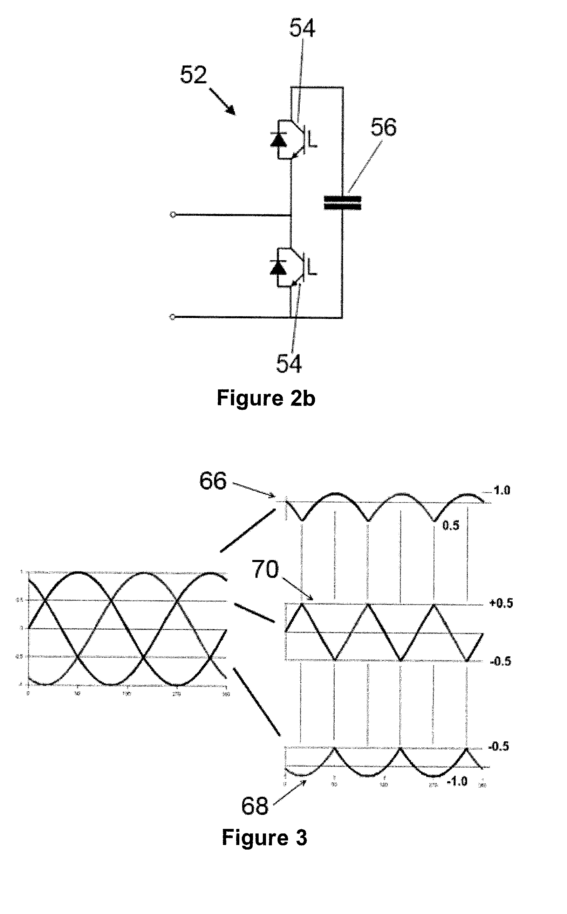

Each module 52 includes a pair of switching elements 54 and an energy storage device in the form of a capacitor 56. In each module 52, the pair of switching elements 54 is connected in parallel with the capacitor 56 in a half-bridge arrangement to define a 2-quadrant unipolar module 52 that can provide zero or positive voltages and can conduct current in two directions. Figure 2b shows the structure of the 2-quadrant unipolar module 52.

The capacitor 56 of each module 52 is selectively bypassed and inserted into the second chain-link converter by changing the states of the corresponding switching elements 54. This selectively directs current through the capacitor 56 or causes current to bypass the capacitor 56 so that the module 52 provides a zero or positive voltage.

The capacitor 56 of the module 52 is bypassed when the switching elements 54 are configured to form a current path that causes current in the second chain-link converter to bypass the capacitor 56, and so the module 52 provides a zero voltage, i.e. the module 52 is configured in a bypassed mode.

The capacitor 56 of the module 52 is inserted into the second chain-link converter when the switching elements 54 are configured to allow the current in the second chain-link converter to flow into and out of the capacitor 56. The capacitor 56 then charges or discharges its stored energy so as to provide a positive voltage, i.e. the module 52 is configured in a non-bypassed mode.

The structure of the chain-link converter permits build-up of a combined voltage across the chain-link converter, which is higher than the voltage available from each of its individual modules 52, via the insertion of the capacitors 56 of multiple modules 52, each providing its own voltage, into the chain-link converter. In this manner the chain-link converter is capable of providing a stepped variable voltage source, which permits the synthesis of a voltage waveform across the chain-link converter using a step-wise approximation. As such each chain-link converter is capable of providing complex voltage waveforms.

Each switching element 54 constitutes an IGBT that is connected in anti-parallel with a diode. It is envisaged that, in other embodiments of the invention, each IGBT may be replaced by a gate turn-off thyristor, a field effect transistor, an injection-enhanced gate transistor, an integrated gate commutated thyristor or any other self-commutated switching device.

It is envisaged that, in other embodiments of the invention, each capacitor 56 may be replaced by another type of energy storage device that is capable of storing and releasing energy, e.g. a battery or fuel cell.

The first voltage source converter 30 includes a synthesizer controller 64 programmed to selectively operate each waveform synthesizer 48,50,58 to synthesize a voltage waveform to control the configuration of the AC voltage at the AC terminal 38 that is switched into circuit with the corresponding further connecting point.

The operation of the first voltage source converter 30 is described as follows, with reference to Figures 3 to 15.

During the operation of the first voltage source converter 30, the synthesizer controller 64 operates the waveform synthesizers 48,50,58 to control the configuration of the AC voltages at the AC terminals 38 in order to facilitate the transfer of power between the AC and DC networks 42,40.

Figure 3 illustrates an operating cycle of the first voltage source converter 30 in which the first, second and third waveform synthesizers 48,50,58 are operated to respectively control the configuration of first, second and third portions 66,68,70 of the AC voltage at each AC terminal 38. In Figure 3, each AC voltage is in the form of a sinusoidal voltage with reference to ground potential.

The switching controller 46 controls the switching of each multi-level switching cell 44 to simultaneously switch each waveform synthesizer 48,50,58 into circuit with a respective one of the AC terminals 38 in order to simultaneously control the configuration of the plurality of AC voltages at the AC terminals 38.

For the purposes of illustrating the configuration of the AC voltages at the AC terminals 38, it is assumed that, at a starting point of 0 electrical degrees, a first of the AC terminals 38 is switched into circuit with the corresponding first further connecting point, a second of the AC terminal 38 is switched into circuit with the corresponding second further connecting point, and a third of the AC terminals 38 is switched into circuit with the corresponding third further connecting point. It will be appreciated that the starting point may instead be any point between 0 to 360 electrical degrees.

The first waveform synthesizer 48 is switched into circuit with the first AC terminal 38 during the period between 0 to 30 electrical degrees and 270 to 360 electrical degrees, with the second AC terminal 38 during the period between 30 to 150 electrical degrees, and with the third AC terminal 38 during the period between 150 to 270 electrical degrees.

The second waveform synthesizer 50 is switched into circuit with the third AC terminal 38 during the period between 0 to 90 electrical degrees and 330 to 360 electrical degrees, with the first AC terminal 38 during the period between 90 to 210 electrical degrees, and with the second AC terminal 38 during the period between 210 to 330 electrical degrees.

The third waveform synthesizer 58 is switched into circuit with the second AC terminal 38 during the period between 0 to 30 electrical degrees, 150 to 210 electrical degrees and 330 to 360 electrical degrees, with the first AC terminal 38 during the period between 30 to 90 electrical degrees and 210 to 270 electrical degrees, and with the third AC terminal 38 during the period between 90 to 150 electrical degrees and 270 to 330 electrical degrees.

In this manner the switching controller 46 controls the switching of each multi-level switching cell 44 to sequentially switch the corresponding AC terminal 38 into circuit with each of the corresponding further connecting points during an operating cycle of the first voltage source converter 30.

In respect of each AC terminal 38 switched into circuit with the first waveform synthesizer 48, the first waveform synthesizer 48 selectively inserts and bypasses the capacitor 56 of each module 52 of the corresponding chain-link converter to allow voltage steps to be added to or subtracted from the positive DC voltage at the first DC terminal 32, and thereby synthesise a voltage waveform to control the configuration of the first portion 66 of the AC voltage at each AC terminal 38.

In respect of each AC terminal 38 switched into circuit with the second waveform synthesizer 50, the second waveform synthesizer 50 selectively inserts and bypasses the capacitor 56 of each module 52 of the corresponding chain-link converter to allow voltage steps to be added to or subtracted from the negative DC voltage at the second DC terminal 34, and thereby synthesise a voltage waveform to control the configuration of the second portion 68 of the AC voltage at each AC terminal 38.

In respect of each AC terminal 38 switched into circuit with the third waveform synthesizer 58, the third waveform synthesizer 58 selectively inserts and bypasses the capacitor 56 of each module 52 of the corresponding chain-link converter to allow voltage steps to be added to or subtracted from the DC voltages at the first and second DC terminals 32,34, and thereby synthesise a voltage waveform at the third terminal 36 to control the configuration of the third portion 70 of the AC voltage at each AC terminal 38.

In this manner the first waveform synthesizer 48 is operated to control the configuration of the first portion 66 of the AC voltage at each AC terminal 38 extending between a peak positive voltage and an intermediate positive voltage, the second waveform synthesizer 50 is operated to control the configuration of the second portion 68 of the AC voltage at each AC terminal 38 extending between a peak negative voltage and an intermediate negative voltage, and the third waveform synthesizer 58 is operated to control the configuration of the third portion 70 of the AC voltage at each AC terminal 38 extending between the intermediate positive and negative voltages.

The full-bridge structure of the 4-quadrant bipolar module 52 permits the operation of the first and second waveform synthesizers 48,50 to control the peak AC voltage at each AC terminal 38 to be higher in magnitude than the DC voltage at each of the first and second DC terminals 32,34. The provision of such a peak AC voltage at each AC terminal 38 enables the reduction of the converter current for a give power transfer, thus further reducing converter losses.

The operating cycle in Figure 3 is repeated by operating each waveform synthesizer 48,50,58 to continuously and cyclically synthesize the respective voltage waveform during a plurality of operating cycles of the first voltage source converter 30 and by switching the multi-level switching cells 44 correspondingly.

The configuration of the first voltage source converter 30 of the invention therefore enables the operation of each waveform synthesizer 48,50,58 to control the configuration of the AC voltage at each of the plurality of AC terminals 38, and thereby allows the control of the configuration of the AC voltages at the AC terminals 38 to be shared among the plurality of waveform synthesizers 48,50,58. This results in savings in terms of size, weight and cost of the first voltage source converter 30 when compared to a conventional voltage source converter in which a given converter component is designed to control the configuration of a single AC phase voltage, thus necessitating the use of multiple copies of the given converter components in order to control the configuration of multiple AC phase voltages.

Optionally each waveform synthesizer 48,50,58 may be operated to synthesize the respective voltage waveform to include at least one triplen harmonic voltage component 72 and to incorporate the or each triplen harmonic voltage component 72 into the AC voltage at the AC terminal 38 that is switched into circuit with the corresponding further connecting point. In this manner one or more triplen harmonic voltage components 72 is incorporated into the AC voltage at each AC terminal 38.

The presence of the or each triplen harmonic voltage component 72 in the AC voltages at the AC terminals 38 would not adversely affect the AC network 42, since the AC network 42 would typically be connected to the AC terminals 38 via a star-delta transformer (not shown).

The or each triplen harmonic component may be selected to control the range of the voltage waveform required to be synthesized by each waveform synthesizer 48,50,58 to control the configuration of the AC voltage at the AC terminal 38 that is switched into circuit with the corresponding further connecting point. Controlling the range of the voltage waveform required to be synthesized by each waveform synthesizer 48,50,58 directly affects the voltage rating required of each waveform synthesizer 48,50,58, and hence the or each triplen harmonic component may be selected to optimise the relative voltage ratings of the waveform synthesizers 48,50,58 to provide further savings in terms of size, weight and cost of the first voltage source converter 30.

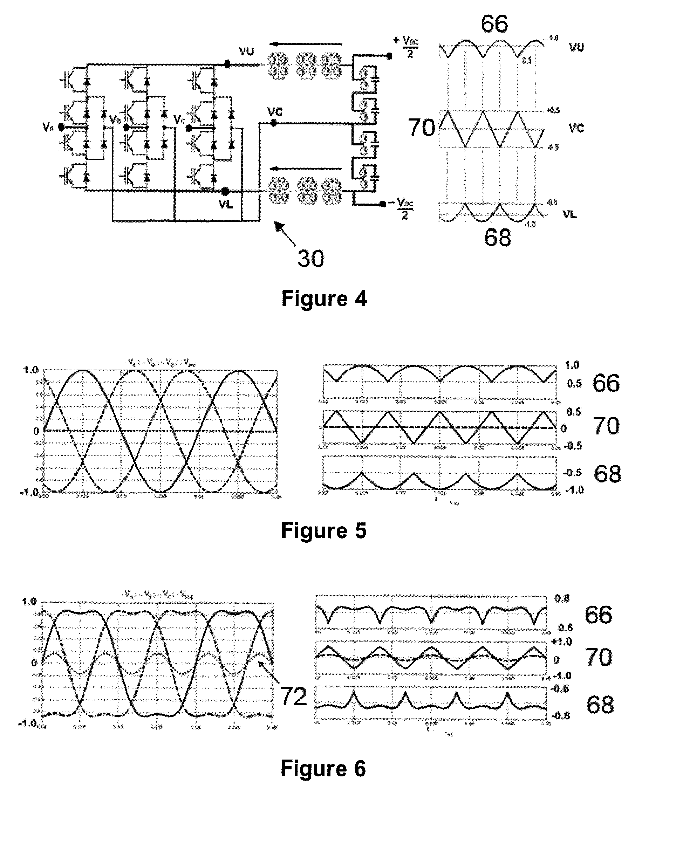

Figures 4 and 5 illustrates the configuration of the AC voltages at the AC terminals 38 in the absence of the incorporation of any triplen harmonic voltage component into the AC voltage at each AC terminal 38. It can be seen from Figures 4 and 5 that the first portion 66 of the AC voltage at each AC terminal 38 has a range of 0.5 pu extending between 0.5 pu and 1.0 pu, the second portion 68 of the AC voltage at each AC terminal 38 has a range of 1.0 pu extending between -0.5 pu and -1.0 pu, and the third portion 70 of the AC voltage at each AC terminal 38 has a range of 0.5 pu extending between -0.5 pu and 0.5 pu.

Figure 6 illustrates the effect of incorporating a positive 3^{rd} harmonic voltage component into the AC voltage at each AC terminal 38. It can be seen from Figure 6 that, in comparison to Figure 5, the range of each of the first and second portions 66,68 of the AC voltage at each AC terminal 38 is reduced to less than 0.2 pu, while the range of the third portion 70 of the AC voltage at each AC terminal 38 is increased beyond 1.0 pu. In this manner it is possible to reduce the range of the voltage waveforms required to be synthesized by the first and second waveform synthesizers 48,50 and therefore the voltage rating of the first and second waveform synthesizers 48,50 with an accompanying increase in voltage rating of the third waveform synthesizer 58.

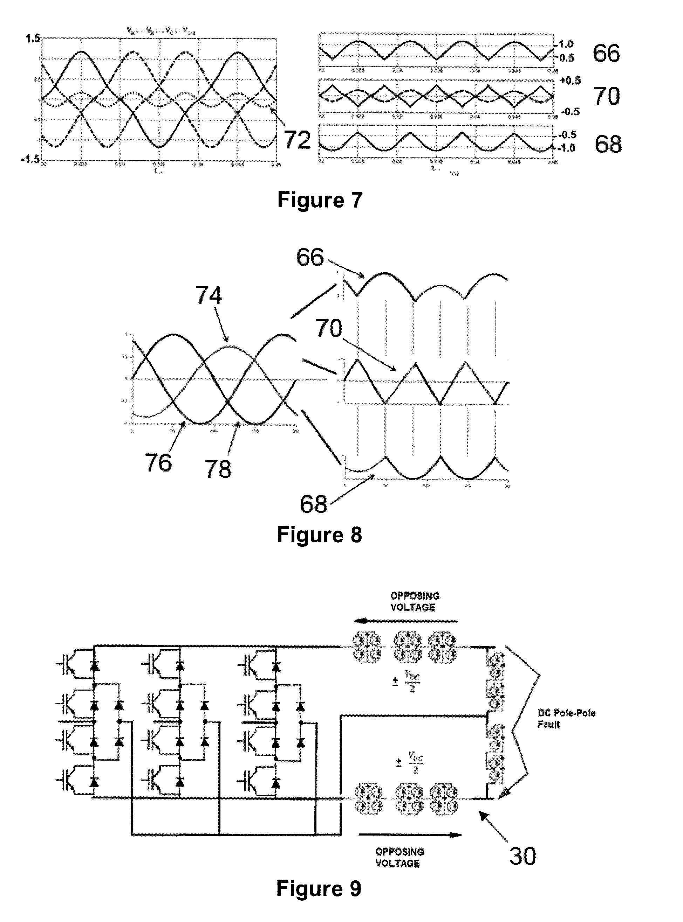

Figure 7 illustrates the effect of incorporating a negative 3^{rd} harmonic voltage component into the AC voltage at each AC terminal 38. It can be seen from Figure 7 that, in comparison to Figure 5, the range of each of the first and second portions 66,68 of the AC voltage at each AC terminal 38 is increased beyond 0.5 pu, while the range of the third portion 70 of the AC voltage at each AC terminal 38 is reduced to less than 1.0 pu. In this manner it is possible to increase the range of the voltage waveforms required to be synthesized by the first and second waveform synthesizers 48,50 and therefore the voltage rating of the first and second waveform synthesizers 48,50 with an accompanying reduction in voltage rating of the third waveform synthesizer 58.

It will be appreciated that the or each triplen harmonic component may be selected such that the first waveform synthesizer 48 is operated to control the configuration of the first portion 66 of the AC voltage at each AC terminal 38 extending between a peak positive voltage and a zero voltage, and the second waveform synthesizer 50 is operated to control the configuration of the second portion 68 of the AC voltage at each AC terminal 38 extending between a peak negative voltage and a zero voltage. This obviates the need to operate the third waveform synthesizer 58 to control the configuration of the AC voltage at each AC terminal 38.

Optionally each waveform synthesizer 48,50,58 may be operated to control the configuration of the AC voltage at each AC terminal 38 independently of the configuration of the AC voltage at each other AC terminal 38. This permits individual configuration of the AC voltage at each AC terminal 38 to obtain a variety of profiles of the AC voltages at the AC terminals 38.

Figure 8 illustrates the generation of a plurality of imbalanced AC voltages 74,76,78 at the AC terminals 38 in which the peak value of one of the AC voltages 74 is lower than the peak values of the other two AC voltages 76,78. In order to control the configuration of the plurality of imbalanced AC voltages 74,76,78 at the AC terminals 38 as shown in Figure 8, the first, second and third waveform synthesizers 48,50,58 may be operated by providing different magnitudes of the AC voltages 74,76,78 at the AC terminals 38 in order to incorporate positive and negative phase sequence components into the AC voltages 74,76,78 at the AC terminals. The capability to generate a plurality of imbalanced AC voltages 74,76,78 at the AC terminals 38 may be used to compensate for steady-state imbalance in the AC network 42 and/or to respond to temporary AC side faults.

A fault or other abnormal operating condition in the first voltage source converter 30, the AC network 42 and/or the DC network 40 may result in the flow of a fault current in the first voltage source converter 30. Figure 9 shows one such fault in the form of a DC pole-to-pole fault.

In the event of a fault current flowing in the first voltage source converter 30 either or both of the first and second waveform synthesizers 48,50 can be operated to synthesize an opposing voltage to oppose the flow of a fault current flowing in the first voltage source converter 30, as shown in Figure 9. The provision of the opposing voltage acts to limit the fault current by opposing the AC line-to-line voltage that drives the fault current, until other protective actions can be taken to remove the fault current or until the fault current subsides on its own. This provides a reliable means of protecting the first voltage source converter 30 and any associated equipment from the fault current, without requiring the installation of additional protection hardware which would result in additional size, weight and cost.

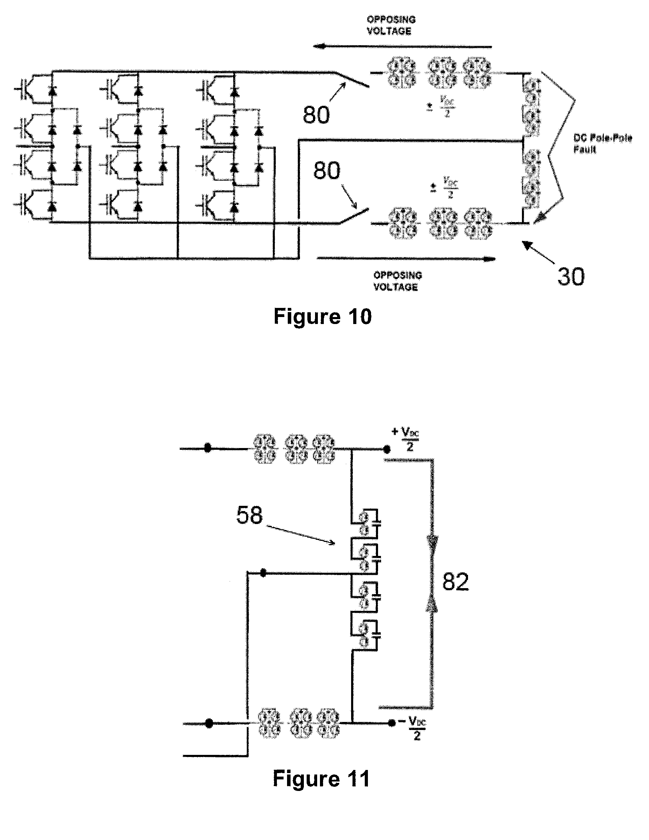

It is envisaged that, in other embodiments of the invention, the first voltage source converter 30 may further include a director switch 80 connected in series with a respective one of the first and second waveform synthesizers 48,50 between the corresponding DC terminal and each corresponding further connecting point, as shown in Figure 10.

Each director switch 80 may include one or more switching elements, which can be turned off to provide voltage blocking capability to replace or complement the opposing voltage provided by each of the first and second waveform synthesizers 48,50 in order to enable the first voltage source converter 30 to cope with the fault current. When the director switch 80 includes a plurality of switching elements, one or more of the switching elements may be turned off to provide the required voltage blocking capability while one or more other of the switching elements may remain in continual conduction.

The provision of the director switches 80 in the first voltage source converter 30 provides a cost-effective, lower foot-print and cheaper solution for responding to a fault current in the first voltage source converter 30 when compared to the addition of further modules 52 to the first and second waveform synthesizers 48,50 to increase their voltage ratings and thereby increase the upper limit of the opposing voltages that can be synthesized, since a given director switch 80 is smaller and cheaper than a module 52 with equivalent or similar voltage blocking capability.

In addition the provision of the director switches 80 in the first voltage source converter 30 permits the reduction of the voltage ratings of the first and second waveform synthesizers 48,50 (for example, by incorporating triplen harmonic components 72 into the AC voltages at the AC terminals 38 as described hereinabove) without hampering the ability of the first voltage source converter 30 to cope with a fault current.

Operation of the first voltage source converter 30 to transfer power between the AC and DC networks 42,40 could result in energy accumulation in (or energy loss from) at least one energy storage device, thus resulting in deviation of the energy level of at least one energy storage device from a reference value.

Such a deviation is undesirable because, if too little energy is stored within a given energy storage device then the range of the voltage waveform the corresponding waveform synthesizer is able to generate is reduced, whereas if too much energy is stored in a given energy storage device then over-voltage problems may arise. The former would require the addition of a power source to restore the energy level of the affected energy storage device to the reference value, while the latter would require an increase in voltage rating of one or more energy storage devices to prevent the over-voltage problems, thus adding to the overall size, weight and cost of the first voltage source converter 30. In addition if too little energy is stored within a given energy storage device then the first voltage source converter 30 might trip due to under-voltage protection.

The configuration of the first voltage source converter 30 allows energy to be transferred to and from each energy storage device to regulate its energy level, thereby obviating the problems associated with a deviation of the energy level of at least one energy storage device from the reference value. Such regulation of the energy level of each energy storage device in the first voltage source converter 30 may be carried out as follows.

The waveform synthesizers 48,50,58 may be operated to regulate an energy level of each storage device of each waveform synthesizer 48,50,58, preferably to minimise the net change in energy level of each energy storage device over an operating cycle of the first voltage source converter 30.

Optionally the third waveform synthesizer 58 may be operated to form a current circulation path including the converter limb and the DC network 40 and to cause a circulation current 82 to flow through the current circulation path and thereby transfer energy to or from the or each corresponding energy storage device from or to the DC network 40, as shown in Figure 11. The connection of the converter limb across the first and second DC terminals 32,34 makes it possible to readily form the current circulation path.

Further optionally each of the first and second waveform synthesizers 48,50 may be operated to synthesize a secondary voltage component 84 so as to transfer energy to or from each corresponding energy storage device and thereby regulate an energy level of each corresponding energy storage device. The secondary voltage component 84 may have the same frequency as a current component flowing through the corresponding waveform synthesizer, and may be a DC voltage component or a harmonic voltage component, e.g. a 3^{rd} harmonic voltage component or any other triplen harmonic voltage component, depending on the nature of the current flowing through the corresponding waveform synthesizer.

When a DC or harmonic current component flows through the waveform synthesizer 48,50, selecting the corresponding secondary voltage component 84, i.e. a direct current or harmonic current component, permits efficient energy transfer to or from each corresponding energy storage device without significantly impacting on the ability of the first voltage source converter 30 to transfer power between the AC and DC networks 42,40.

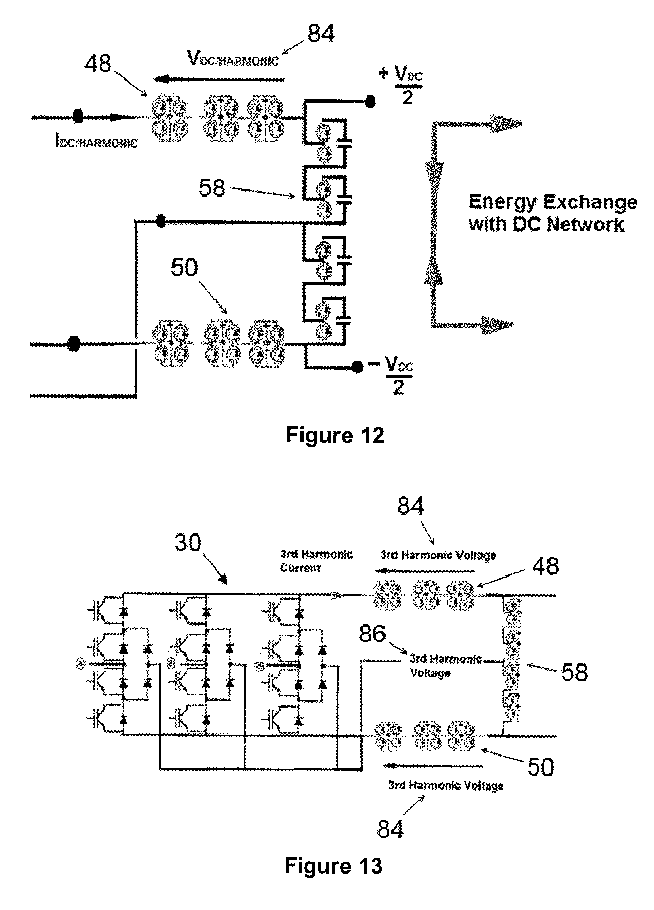

As shown in Figure 12, synthesis of the secondary voltage component by each of the first and second waveform synthesizers 48,50 can be carried out at the same time as the formation of the current circulation path by the third waveform synthesizer 58.

The synthesis of the secondary voltage component by each of the first and second waveform synthesizers 48,50 may result in a change in the respective portion 66,68,70 of the AC voltage at each AC terminal 38. Consequently, in order to maintain a symmetrical profile of the AC voltages at the AC terminal 38, the third waveform synthesizer 58 is operated to synthesize a compensatory voltage component 86 and incorporate the compensatory voltage component 86 into the AC voltage at the AC terminal 38 that is switched into circuit with the corresponding third further connecting point. The compensatory voltage component 86 is configured to compensate for any change to the AC voltage at each AC terminal 38 resulting from the synthesis of each secondary voltage component 84.

For example, as shown in Figure 13, the synthesis of the secondary voltage component 84 in the form of a 3^{rd} harmonic voltage component by each of the first and second waveform synthesizers 48,50 is accompanied by the synthesis of the compensatory voltage component 86 in the form of a 3^{rd} harmonic voltage component in order to maintain a symmetrical profile of the AC voltages at the AC terminals 38.

It will be understood that the above-described energy level regulation functions can be carried out at the same time as the operation of the first voltage source converter 30 to control the configuration of the AC voltages at the AC terminals 38 to facilitate transfer of power between the AC and DC networks 42,40.

Optionally the first limb portion 60 of the converter limb may further include an inductor L connected in series with the first waveform synthesizer portion, and the second limb portion 62 of the converter limb may further include another inductor L connected in series with the second waveform synthesizer portion.

The provision of the inductors L in the converter limb permits operation of the third waveform synthesizer 58 to filter one or more undesirable current components from the DC network 40, which may originate from the operation of the first voltage source converter 30 or from another source. More specifically the third waveform synthesizer 58 may be operated to synthesize the voltage waveform to control a current flowing in each inductor L, in order to directly control the shape of the current flowing in each inductor L, and thereby inject one or more anti-phase current components into the DC network 40 so as to cancel one or more corresponding current components in the DC network 40. In this regard partial or full cancellation of undesirable current components, such as ripple current components, in the DC network 40 may be carried out.

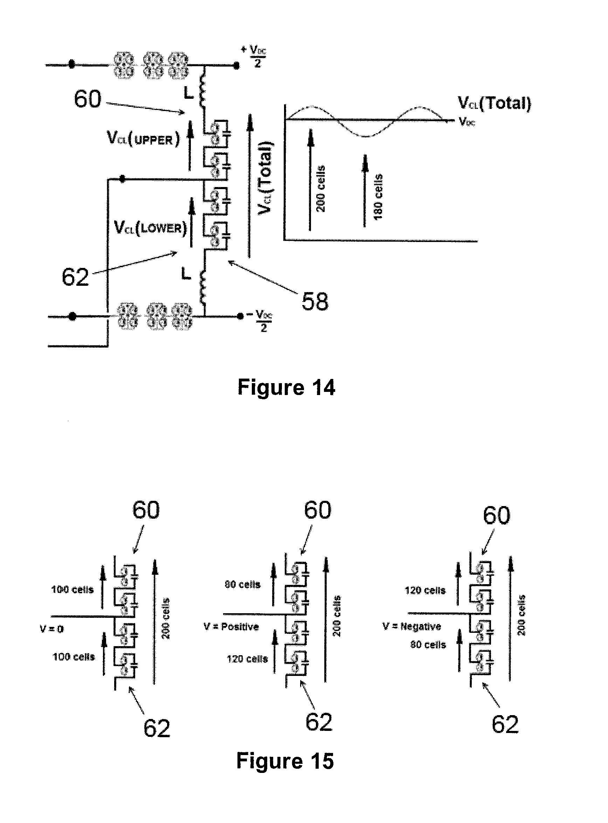

To inject one or more anti-phase current components into the DC network 40, each waveform synthesizer portion is operated to synthesize a respective voltage waveform to actively vary a voltage differential between the voltages across the first and second limb portions 60,62 so as to control the current flowing in the inductor L, as shown in Figure 14.

Figure 15 illustrates the operation of each waveform synthesizer portion to synthesize the respective voltage waveform through selective insertion and bypass of its modules 52.

To generate a zero voltage differential between the voltages across the first and second limb portions 60,62, the number of inserted modules 52 is the same in both waveform synthesizer portions. To generate a positive voltage differential between the voltages across the first and second limb portions 60,62, the number of inserted modules 52 in the second waveform synthesizer portion is higher than the number of inserted modules 52 in the first waveform synthesizer portion. To generate a negative voltage differential between the voltages across the first and second limb portions 60,62, the number of inserted modules 52 in the second waveform synthesizer portion is lower than the number of inserted modules 52 in the first waveform synthesizer portion.

Throughout the generation of the zero, positive and negative voltage differentials, the total number of inserted modules 52 in the third waveform synthesizer 58 remains the same in order to control the average voltage across the converter limb to be the same or substantially the same as the voltage of the DC network 40 presented across the first and second DC terminals 32,34

At any time during the generation of the variable voltage differential, the third waveform synthesizer 58 remains able to independently control the configuration of the AC voltage at the AC terminal 38 that is switched into circuit with the corresponding third further connecting point.

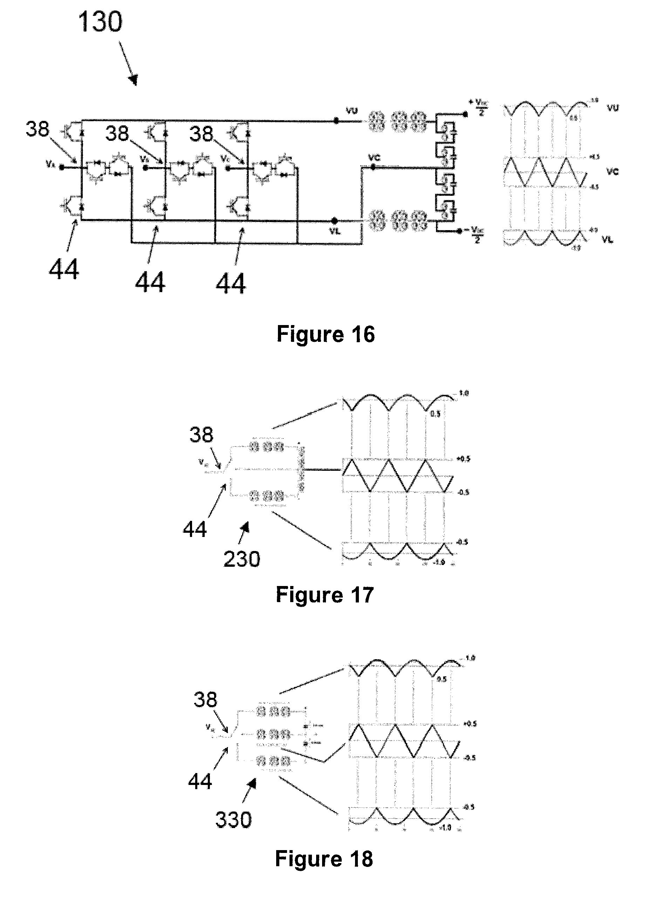

A second voltage source converter according to a second embodiment of the invention is shown in Figure 16 and is designated generally by the reference numeral 130. The second voltage source converter 130 of Figure 16 is similar in structure and operation to the first voltage source converter 30 of Figure 1, and like features share the same reference numerals.

The second voltage source converter 130 differs from the first voltage source converter 30 in that, in the second voltage source converter 130, each three-level neutral point clamped switching cell is replaced by a three-level neutral point piloted switching cell.

Each three-level neutral point piloted switching cell includes an AC connecting point and first, second and third further connecting points. A first IGBT is connected between the AC and first further connecting points, a second IGBT are connected between the AC and second further connecting points, and an AC switch is connected between the AC and third further connecting points. The AC switch is in the form of a pair of inverse-series-connected IGBTs, each of which is connected in anti-parallel with a respective diode.

The third terminal 36 is directly connected to each third further connecting point of each multi-level switching cell 44. The AC connecting point of each multi-level switching cell 44 is connected to a respective one of the plurality of AC terminals 38. The arrangement of the IGBTs and AC switch in each multi-level switching cell 44 permits selective switching of the corresponding AC terminal 38 into circuit with each of the corresponding further connecting points separately, i.e. one at a time.

A third voltage source converter according to a third embodiment of the invention is shown in Figure 17 and is designated generally by the reference numeral 230. The third voltage source converter 230 of Figure 17 is similar in structure and operation to the first voltage source converter 30 of Figure 1, and like features share the same reference numerals.

The third voltage source converter 230 differs from the first voltage source converter 30 in that, in the third voltage source converter 230, each multi-level neutral point clamped switching cell is replaced by a respective three-pole, triple throw switching cell. Figure 17 shows schematically one of the three three-pole, triple throw switching cells.

Each three-pole, triple throw switching cell includes an AC connecting point and first, second and third further connecting points, whereby each further connecting point defines one of the three poles. A switching element is arranged to permit its switching to selectively switch the AC connecting point into circuit with each of the corresponding further connecting points separately, i.e. one at a time. The third terminal 36 is directly connected to each third further connecting point of each multi-level switching cell 44. The AC connecting point of each multi-level switching cell 44 is connected to a respective one of the plurality of AC terminals 38.

A fourth voltage source converter according to a fourth embodiment of the invention is shown in Figure 18 and is designated generally by the reference numeral 330. The fourth voltage source converter 330 of Figure 18 is similar in structure and operation to the third voltage source converter 230 of Figure 17, and like features share the same reference numerals.

The fourth voltage source converter 330 differs from the third voltage source converter 230 in that, in the fourth voltage source converter 330, the converter limb omits the third waveform synthesizer 58, each limb portion 60,62 includes a respective DC side capacitor, a junction between the two DC side capacitors defines the third terminal 36, and the third waveform synthesizer 58 is connected between the third terminal 36 and each third connecting point of each multi-level switching cell 44.

In addition the third waveform synthesizer 58 of the fourth voltage source converter 330 is similar in structure and operation to the first chain-link converter described above with reference to the first voltage source converter 30 of Figure 1.

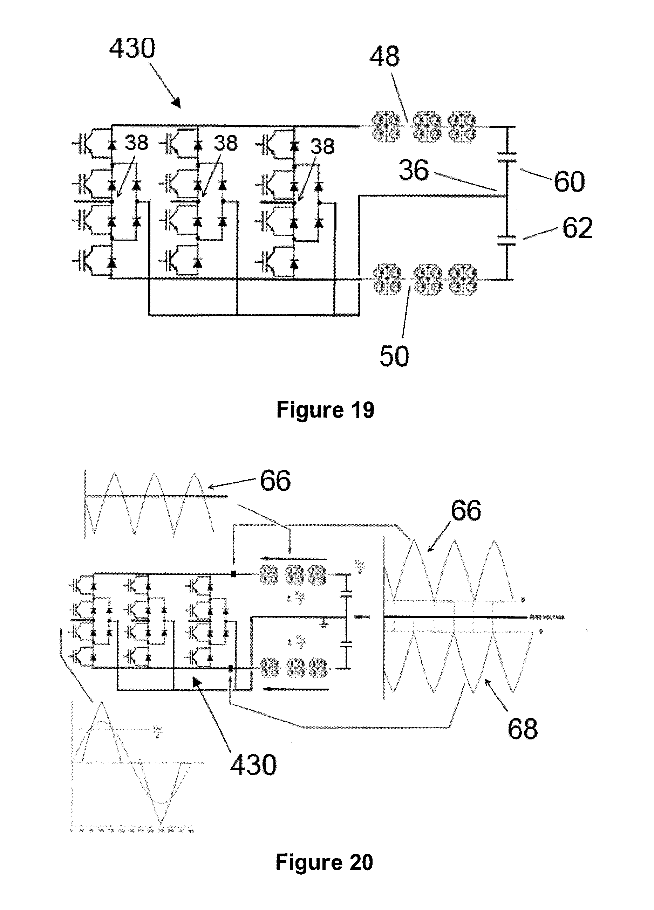

A fifth voltage source converter according to a fifth embodiment of the invention is shown in Figure 19 and is designated generally by the reference numeral 430. The fifth voltage source converter 430 of Figure 19 is similar in structure and operation to the first voltage source converter 30 of Figure 1, and like features share the same reference numerals.

The fifth voltage source converter 430 differs from the first voltage source converter 30 in that, in the fifth voltage source converter 430, the converter limb omits the third waveform synthesizer 58, each limb portion 60,62 includes a respective DC side capacitor, and a junction between the two DC side capacitors defines the third terminal 36. In other words, the fifth voltage source converter 430 omits the third waveform synthesizer 58.

As described above with reference to the first voltage source converter 30 of Figure 1, the or each triplen harmonic component may be selected such that the first waveform synthesizer 48 of the fifth voltage source converter 430 is operated to control the configuration of the first portion 66 of the AC voltage at each AC terminal 38 extending between a peak positive voltage and a zero voltage, and the second waveform synthesizer 50 of the fifth voltage source converter 430 is operated to control the configuration of the second portion 68 of the AC voltage at each AC terminal 38 extending between a peak negative voltage and a zero voltage, as shown in Figure 20. Accordingly there is no need to operate the third waveform synthesizer 58 to control the configuration of the AC voltage at each AC terminal 38, thus permitting its omission from the fifth voltage source converter 430.

It is envisaged that, in other embodiments of the invention, the only waveform synthesizers in the voltage source converter may be the first and second waveform synthesizers 48,50, or the first, second and third waveform synthesizers 48,50,58. This results in a compact and minimal arrangement of the voltage source converter that is optimised for applications requiring only the first and second waveform synthesizers 48,50 or only the first, second and third waveform synthesizers 48,50,58, thus providing further savings in terms of size, weight and cost.

It will be appreciated that the topologies of the voltage source converter 30,130,230,330,430 and its components (e.g. the multi-level switching cells 44, the waveform synthesizers 48,50,58) in the non-limiting specific embodiments described hereinabove are merely chosen to illustrate the working of the invention, and the invention is applicable to other topologies of the voltage source converter and its components.

## Claims

1. A voltage source converter comprising: first and second DC terminals for connection to a DC network; a third terminal for connection to ground or a voltage; and a plurality of AC terminals, each AC terminal for connection to a respective phase of a multi-phase AC network,
wherein the voltage source converter includes:
a plurality of multi-level switching cells, each multi-level switching cell including an AC connecting point and first, second and third further connecting points, the third terminal connected to each third further connecting point of each multi-level switching cell, the AC connecting point of each multi-level switching cell being connected to a respective one of the plurality of AC terminals, each multi-level switching cell being arranged to permit selectively switching of the corresponding AC terminal into circuit with each of the corresponding further connecting points separately;
a switching controller programmed to control the switching of each multi-level switching cell to selectively switch the corresponding AC terminal into circuit with each of the corresponding further connecting points separately;
first and second waveform synthesizers, the first waveform synthesizer connected between the first DC terminal and each first further connecting point of each multi-level switching cell, the second waveform synthesizer connected between the second DC terminal and each second further connecting point of each multi-level switching cell; and
a synthesizer controller programmed to selectively operate each waveform synthesizer to synthesize a voltage waveform to control the configuration of the AC voltage at the AC terminal that is switched into circuit with the corresponding further connecting point.

2. A voltage source converter according to any preceding claim wherein each waveform synthesizer is or includes a chain-link converter.

3. A voltage source converter according to any preceding claim wherein each multi-level switching cell is selected from a group including:
• a three-level switching cell;
• a neutral point clamped switching cell;
• a neutral point piloted switching cell;
• a three-pole, triple throw switching cell..

4. A voltage source converter according to any preceding claim wherein the switching controller is programmed to control the switching of each multi-level switching cell to simultaneously switch each waveform synthesizer into circuit with a respective one of the AC terminals.

5. A voltage source converter according to any preceding claim wherein the switching controller is programmed to control the switching of each multi-level switching cell to sequentially switch the corresponding AC terminal into circuit with each of the corresponding further connecting points during an operating cycle of the voltage source converter.

6. A voltage source converter according to any preceding claim including a converter limb extending between the first and second DC terminals, wherein the converter limb includes two DC side capacitors, and a junction between the two DC side capacitors defines the third terminal.

7. A voltage source converter according to any preceding claim wherein the only waveform synthesizers in the voltage source converter are the first and second waveform synthesizers.

8. A voltage source converter according to any of Claims 1 to 6 further including a third waveform synthesizer connected to the third terminal.

9. A voltage source converter according to Claim 8 wherein the only waveform synthesizers in the voltage source converter are the first, second and third waveform synthesizers.

10. A voltage source converter according to Claim 8 or Claim 9 when dependent from Claims 1 to 5, wherein the voltage source converter includes a converter limb, the converter limb includes first and second limb portions, each limb portion extends between the third terminal and a respective one of the first and second DC terminals, the third waveform synthesizer includes first and second waveform synthesizer portions, and each limb portion includes a respective one of the waveform synthesizer portions.

11. A voltage source converter according to Claim 8 or Claim 9 wherein the third waveform synthesizer is connected between the third terminal and each third connecting point of each multi-level switching cell.

12. A voltage source converter according to any of Claims 1 to 10 wherein the third terminal is directly connected to each third further connecting point of each multi-level switching cell.

13. A voltage source converter according to any preceding claim wherein the synthesizer controller is programmed to selectively operate each waveform synthesizer to continuously and/or cyclically synthesize the voltage waveform for the duration of at least one operating cycle of the voltage source converter.

14. A voltage source converter according to any preceding claim wherein the synthesizer controller is programmed to selectively operate each waveform synthesizer to control the configuration of a respective portion of the AC voltage at each AC terminal.

15. A voltage source converter according to Claim 14 wherein the synthesizer controller is programmed to selectively operate:
• the first waveform synthesizer to control the configuration of a first portion of the AC voltage at each AC terminal extending between: a peak positive voltage; and a zero voltage or an intermediate positive voltage; and
• the second waveform synthesizer to control the configuration of a second portion of the AC voltage at each AC terminal extending between: a peak negative voltage; and a zero voltage or an intermediate negative voltage.

16. A voltage source converter according to Claim 15 when dependent from any of Claims 8 to 11, wherein the synthesizer controller is programmed to selectively operate the third waveform synthesizer to control the configuration of a third portion of the AC voltage at each AC terminal extending between the intermediate positive and negative voltages when the first portion of the AC voltage at each AC terminal extends between the peak positive and intermediate voltages and when the second portion of the AC voltage at each AC terminal extends between the peak negative and intermediate voltages.

17. A voltage source converter according to any preceding claim wherein the synthesizer controller is programmed to selectively operate each waveform synthesizer to synthesize the voltage waveform to include at least one triplen harmonic voltage component and to incorporate the or each triplen harmonic voltage component into the AC voltage at the AC terminal that is switched into circuit with the corresponding further connecting point.

18. A voltage source converter according to Claim 17 wherein the or each triplen harmonic component is selected to control the range of the voltage waveform required to be synthesized by each waveform synthesizer to control the configuration of the AC voltage at the AC terminal that is switched into circuit with the corresponding further connecting point, and optionally wherein the or each triplen harmonic component is selected to control the range of the voltage waveform required to be synthesized by each of the first and second waveform synthesizers to extend between a zero voltage and a respective one of peak positive and negative voltages.

19. A voltage source converter according to any preceding claim wherein the synthesizer controller is programmed to selectively operate the waveform synthesizers to control the configuration of the AC voltage at each AC terminal independently of the configuration of the AC voltage at each other AC terminal.

20. A voltage source converter according to Claim 19 wherein the synthesizer controller is programmed to selectively operate the waveform synthesizers to control the configuration of a plurality of imbalanced AC voltages at the AC terminals.

21. A voltage source converter according to any preceding claim wherein the synthesizer controller is programed to operate either or both of the first and second waveform synthesizers to synthesize an opposing voltage to oppose the flow of a fault current flowing in the voltage source converter.

22. A voltage source converter according to any preceding claim further including at least one switching element connected in series with either or a respective one of the first and second waveform synthesizers between the corresponding DC terminal and each corresponding further connecting point.

23. A voltage source converter according to any preceding claim wherein at least one of the waveform synthesizers includes at least one energy storage device, and the synthesizer controller is programmed to selectively operate the at least one of the waveform synthesizers to synthesize a secondary voltage component so as to transfer energy to or from the or each corresponding energy storage device and thereby regulate an energy level of the or each corresponding energy storage device, preferably to minimise a net change in energy level of the or each corresponding energy storage device over a defined period.

24. A voltage source converter according to Claim 23 wherein the secondary voltage component has the same frequency as a current component flowing through the corresponding waveform synthesizer.

25. A voltage source converter according to Claim 23 or Claim 24 wherein the secondary voltage component is selected from a group including:
• a harmonic voltage component, preferably a triplen harmonic voltage component, further preferably a 3^{rd} harmonic voltage component;
• a DC voltage component.

26. A voltage source converter according to Claim 25 when dependent from any of Claims 8 to 11, wherein the synthesizer controller is programmed to selectively operate the third waveform synthesizer to synthesize a compensatory voltage component and incorporate the compensatory voltage component into the AC voltage at the AC terminal that is switched into circuit with the corresponding third further connecting point when either or each of the first and second waveform synthesizers are operated to synthesize the or the respective secondary voltage component, the compensatory voltage component being configured to compensate for any change to the AC voltage at each AC terminal resulting from the synthesis of each secondary voltage component.

27. A voltage source converter according to Claim 26 wherein the compensatory voltage component is identical to each of the secondary voltage components.

28. A voltage source converter according to Claim 10 or any claim dependent thereon wherein the third waveform synthesizer includes at least one energy storage device, and the synthesizer controller is programmed to selectively operate the third waveform synthesizer to form a current circulation path including the converter limb and the DC network and to cause a circulation current to flow through the current circulation path and thereby transfer energy to or from the or each corresponding energy storage device from or to the DC network.

29. A voltage source converter according to Claim 10 or any claim dependent thereon, wherein the converter limb further includes an inductor connected with the third waveform synthesizer between the first and second DC terminals, and the synthesizer controller is programmed to selectively operate the third waveform synthesizer to synthesize the voltage waveform to control a current flowing in the inductor and thereby inject a filtering current component into the DC network so as to cancel a current component in the DC network.

30. A voltage source converter according to Claim 29 wherein the synthesizer controller is programmed to selectively operate each waveform synthesizer portion to synthesize a respective voltage waveform to simultaneously:
• actively vary a voltage differential between the voltages across the first and second limb portions so as to control the current flowing in the inductor; and
• control the average voltage across the converter limb to be the same or substantially the same as the voltage of the DC network presented across the first and second DC terminals.

31. A voltage source converter according to any preceding claim including three AC terminals, each AC terminal for connection to a respective phase of a three-phase AC network.
